# EUROPEAN PATENT APPLICATION

(11) **EP 2 210 532 A2**
(43) Date of publication of application: **28.07.2010**
(21) Application number: 09176133.8
(22) Date of filing: 16.11.2009
(51) Int. Cl.: A47F 11/04, G06Q 30/00

(54) **Smart full-length mirror**

(30) Priority: 14.11.2008 NL 2002211
(71) Applicant: N.V. Nederlandsche Apparatenfabriek NEDAP, 7141 DC Groenlo (NL)
(72) Inventor: Pape, Bram Pieter, 7141 BX, Groenlo (NL)
(74) Representative: Hatzmann, Martin

(57) **Abstract**

A system for providing a full-length mirror provided with a display, preferably the size of a full-length mirror, and a camera for obtaining at least one image (such as a photograph, a video, and the like) of a user standing in front of the display and a signal processing unit for depicting an image of the user made with the camera on the display. The invention relates to a system for providing a full-length mirror.

## Description

The invention relates to a system for providing a full-length mirror.

### Problem description

When trying on different articles (for instance clothing/optics/accessories) in front of a mirror, it is difficult for the user (also referred to as customer or client) to remember and compare the images seen in the mirror of all articles tried on. This is partly because, looking at the image of the last article tried on, one sees the image of the first no longer in front of oneself, but only in the mind's eye. Also, it is not possible outside the store to have another look at an article tried on if it has not been bought.

Further, it is not possible to ask the opinion of another person or other persons about how the articles tried on "look", unless this person/these persons is/are physically present during trying on.

Further, in the current situation, the user does not get any other information about an article besides what is to be known by looking at the article and the labels/logos attached to the article. So, for instance, no information or advice about possible combinations with other articles, available sizes, materials, origin, stock, available colors, price, date of production, etc.

Finally, in the current situation, it is only possible to provide the customer with additional information or advice when the retailer is directly involved.

Further, it may be useful to involve the customer in the marketing efforts of the retailer.

### Solution

According to the invention, a system for providing a full-length mirror is provided with a display, preferably the size of a full-length mirror, and a camera for obtaining at least one image (such as a photograph, a video, and the like) of a user standing in front of the display and a signal processing unit for depicting on the display an image of the user made with the camera.

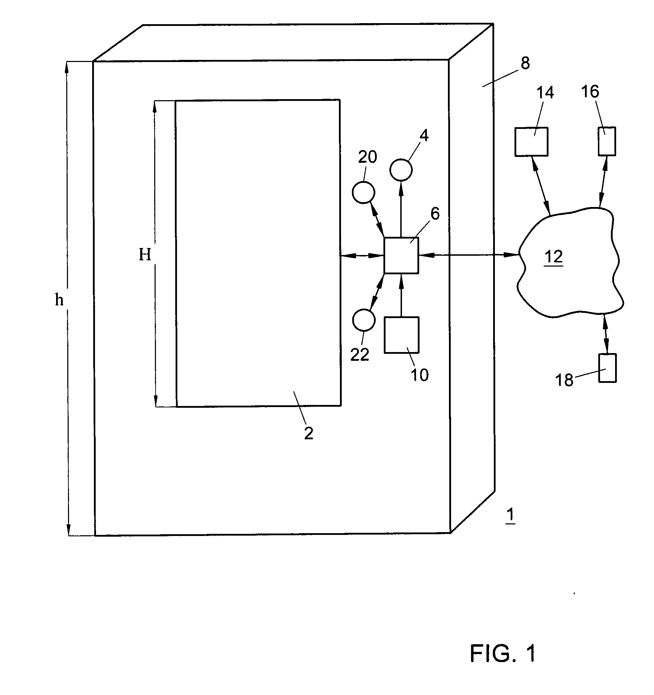

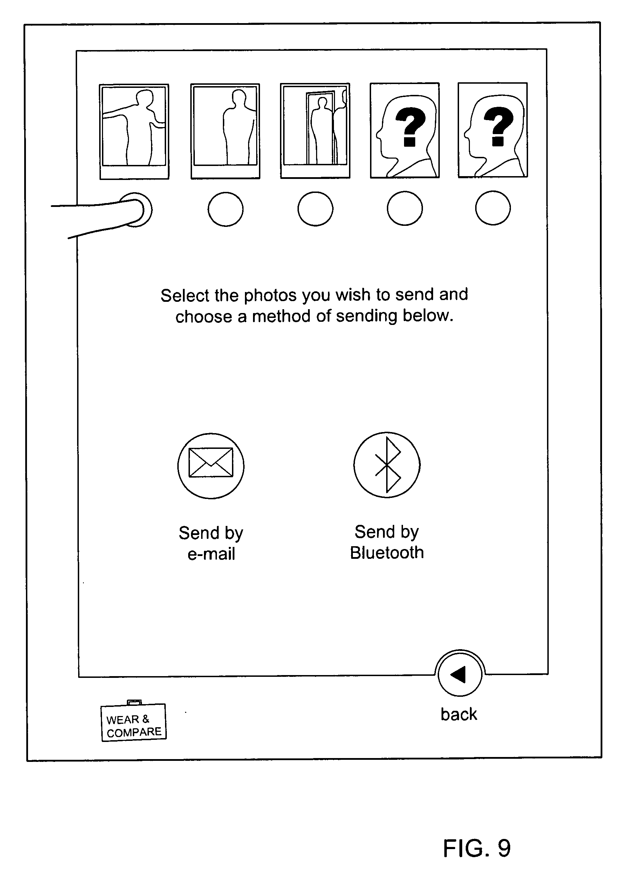

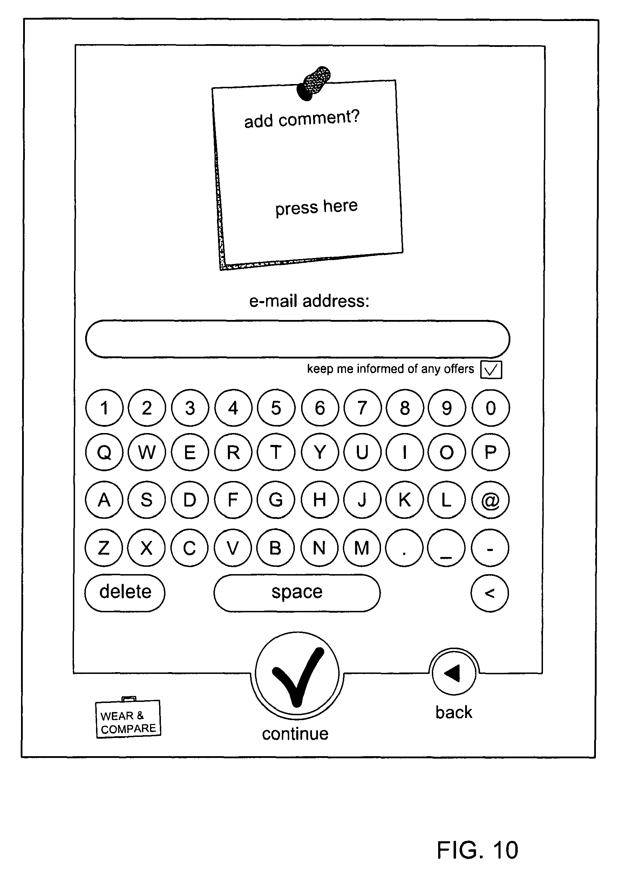

With reference to Figs.1-11, a preferred embodiment of a system for providing a full-length mirror according to the invention is discussed. The system 1 (see Fig. 1) for providing a full-length mirror is provided with a display 2 (also referred to as screen), preferably the size of a full-length mirror, and a camera 4 for obtaining an image of a user standing in front of the display and a signal processing unit 6 for depicting on the display an image of the user made with the camera. The system is further provided with a housing 8 provided with the camera 4 and the display 2. The height h of the full-length mirror may, for instance, vary from 100-250 cm, preferably from 125-175 cm. The height H of the housing may, for instance, vary from 100-300 cm, preferably from 125-200 cm.

With the proposed system, images such as photographs or videos can be made of the user (also referred to as customer or client) when trying on different articles. These images can be seen on the display and can simply be ordered/edited/deleted by the user by "dragging" them across the screen. In this example, the display is designed as a touch screen. In this manner, the articles tried on can be compared more realistically and more easily by the user.

The user can manually enter an e-mail address (via the touch screen) or can automatically retrieve/enter this by means of electronic identification (for instance via a customer card with barcode/RFID, whereby the system communicates with the retailer's customer card database). The system is then provided with means 10 to determine the identity of a person, such as a barcode reader, an RFID reader, a passport reader, a customer card reader, etc. In this manner, by the signal processing unit, the images with an accompanying message, which can also be entered via the touch screen 2, can be sent to the user, to third parties or (directly or indirectly) to other popular web applications. In this manner, communication back and forth can take place immediately or later with regard to advice or opinions about the articles tried on or about the articles bought after trying on. It is also possible outside the store to have another look at the articles tried on and optionally (still) buy them via a web shop or by visiting the store again. Also, the images can be stored in the signal processing unit so that a client can look at these images again later on the display, preferably not until the client has been able to successfully identify himself to the system.

Further, there is also the possibility to show information about the articles by means of electronic recognition (such as pixel recognition or RFID), such as available sizes, type of fabrics or material used, available stock, available colors, advice about possible combinations with other articles, models wearing the article, etc. The signal processing means may be arranged for this purpose. With pixel recognition, the signal processing unit 6 is arranged to recognize clothing worn by a person of which an image is made with the camera 4 from the image (pattern recognition). With RFID, the clothing is provided with an RFID label which can be read out by an RFID reader 10 of the system. The read-out code of the clothing is then supplied to the signal processing unit 6 for the above-mentioned further processing.

The system can collect important data about the use and these data can be sent via the Internet 12 to a central data center 14. The signal processing means 6 may be arranged for this as well.

The retailer can gain access to this information via a PC 16 or mobile telephone 18 via a secure Internet connection 12 (if he has access via a log-in code) and can perform trend overviews and statistics made automatically on the basis of this information.

Further, it is possible to carry out remote maintenance, service and upgrades via the Internet, for instance from the central data center 14.

The following data can *inter alia* be collected:
- number of users;
- the times of the use;
- number of images made;
- number of e-mails sent;
- users who have taken images, by means of: entered e-mail address, electronic and/or biometric identification; and
- recognition of the articles via electronic identification.

In order to guarantee privacy, the link between images and user is encrypted and particular privacy-sensitive user data can automatically be deleted or encrypted by the system.

Also, with a preset timer, the application can close down (so that the user needs to identify himself again to the system before he can continue).

Other possibilities of the system are that the retailer can have the application customized, for instance by adding a logo for advertising purposes/recognition and that the touch screen can change to a particular mode to show other images, and multimedia for, for instance, advertising purposes such as promotion of a new collection.

Further, by means of motion detection, it is possible to set the system in particular modes (for instance a mode in which, when no one is in front of the screen, the system shows an advertising image). Motion detection may be carried out with the camera 4 by the signal processing unit 6 by analyzing recorded images. Also, motion detection may be carried out by the signal processing unit 6 with a separate sensor 20, such as for instance an infrared sensor connected with the signal processing unit 6.

The camera (preferably provided at eye level (between preferably 140-180 cm with respect to a floor)) is activated by the user (in connection with privacy) to make a recording. Activation can take place by operating a button of the touch screen.

In order to link the images exclusively to the user, the user needs to identify himself. This may take place in various manners: for instance via a user name and password to be generated by the user. But also electronic identification (scanning a customer card with barcode, RFID) and/or biometric identification with the aid of the reader 10.

It is also possible to have the identification proceed by means of a mobile telephone (NFC; Near Field Communication). To this end, the system may be provided with a special NFC reader 22 to retrieve the respective information.

In order to maximally guarantee the privacy, the link between images and user is encrypted by means of software, so that it cannot be retrieved (except by the respective software).

A user may add images at any moment by identifying himself again, for instance when, after user 1, who has stopped taking images, user 2 identifies himself and takes images, user 1 may add images again after identification when user 2 has stopped taking images.

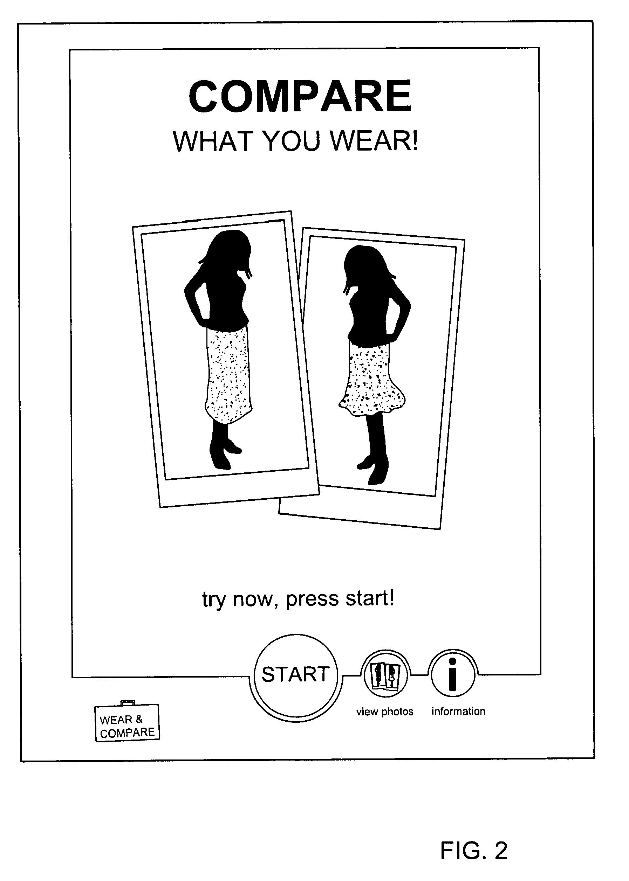

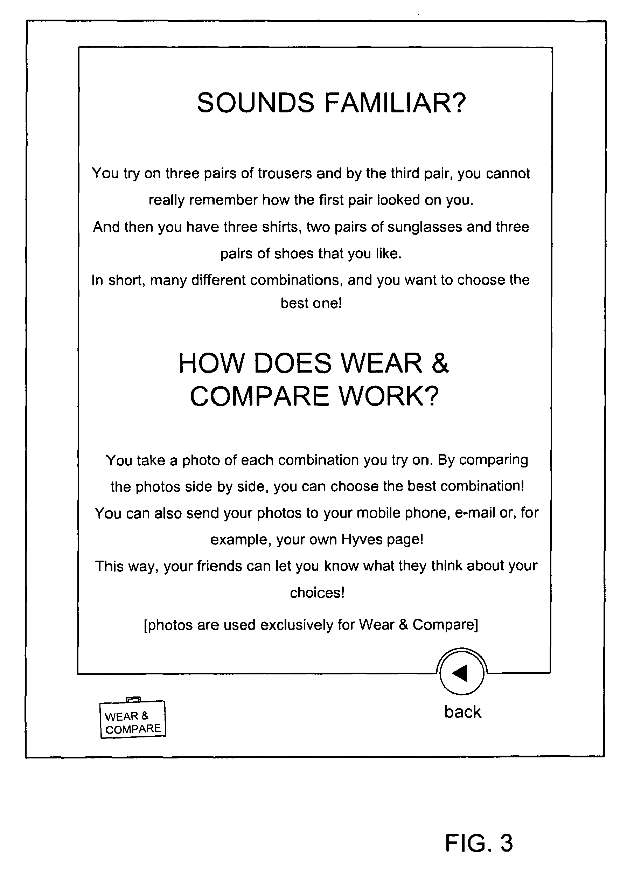

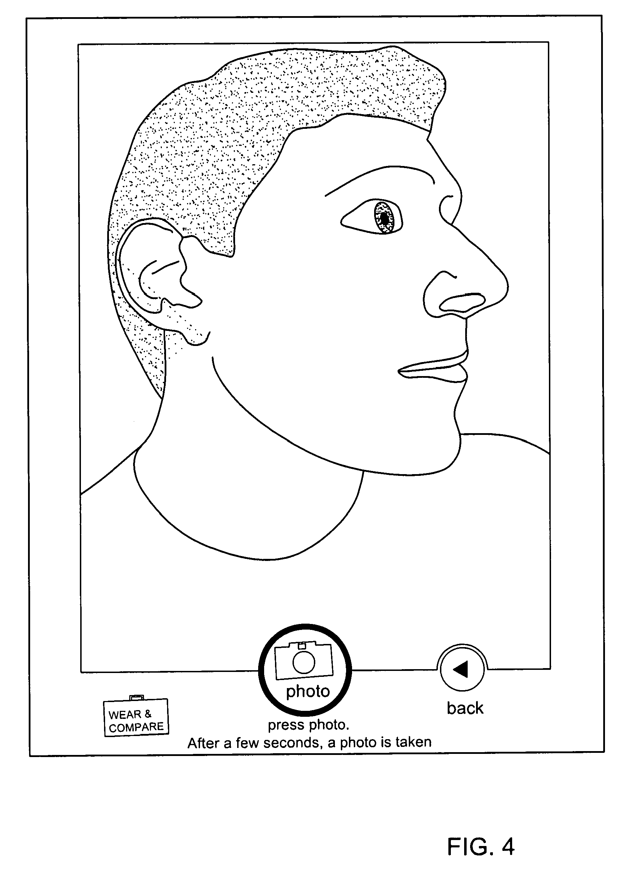

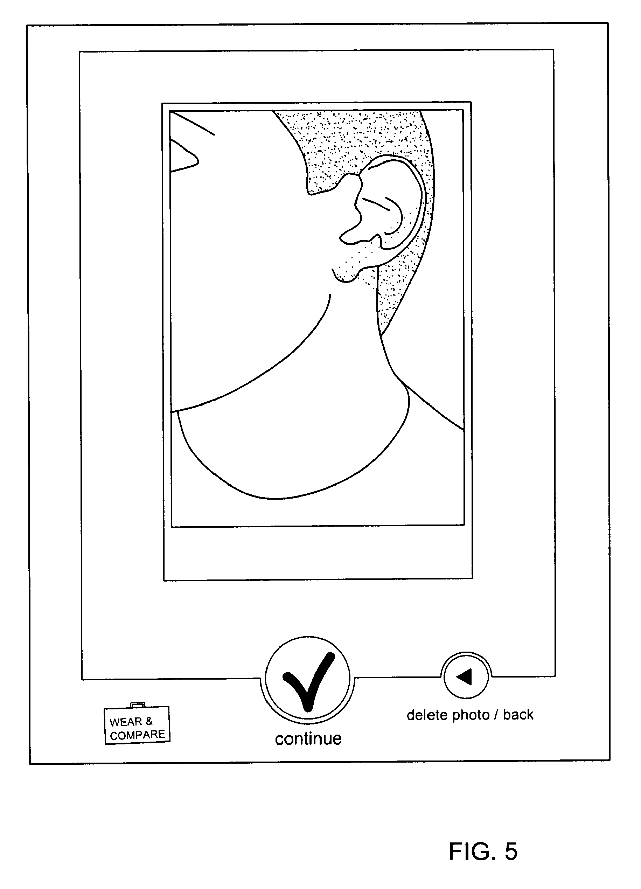

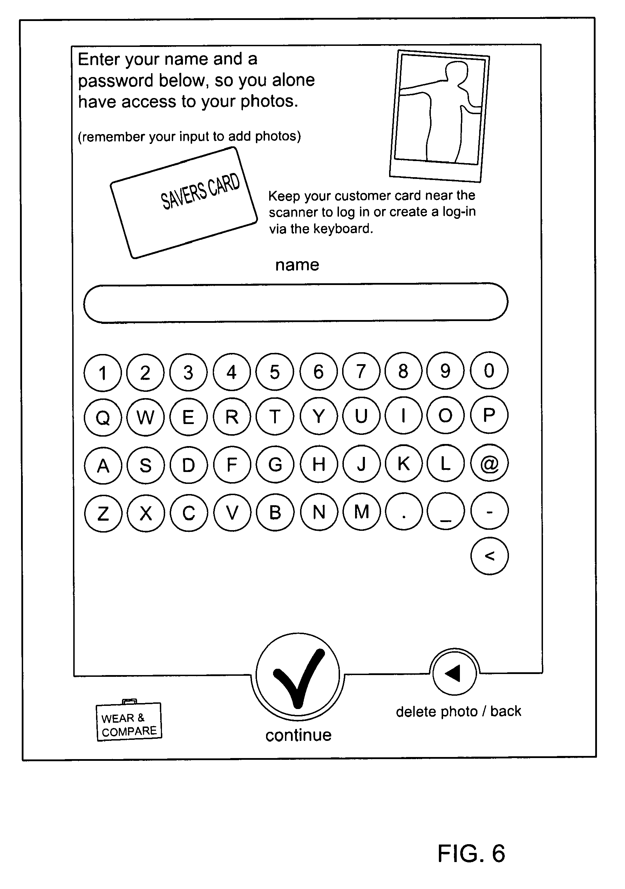

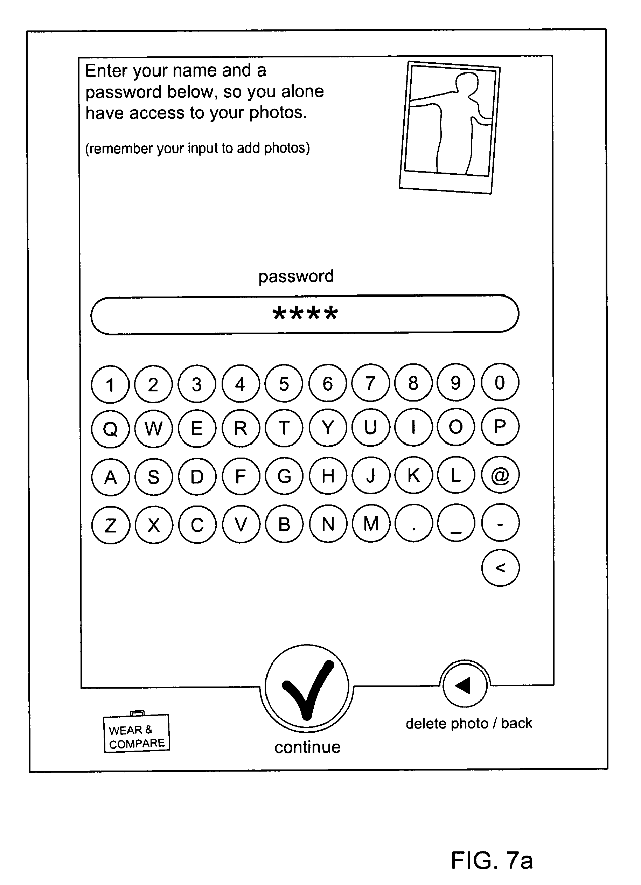

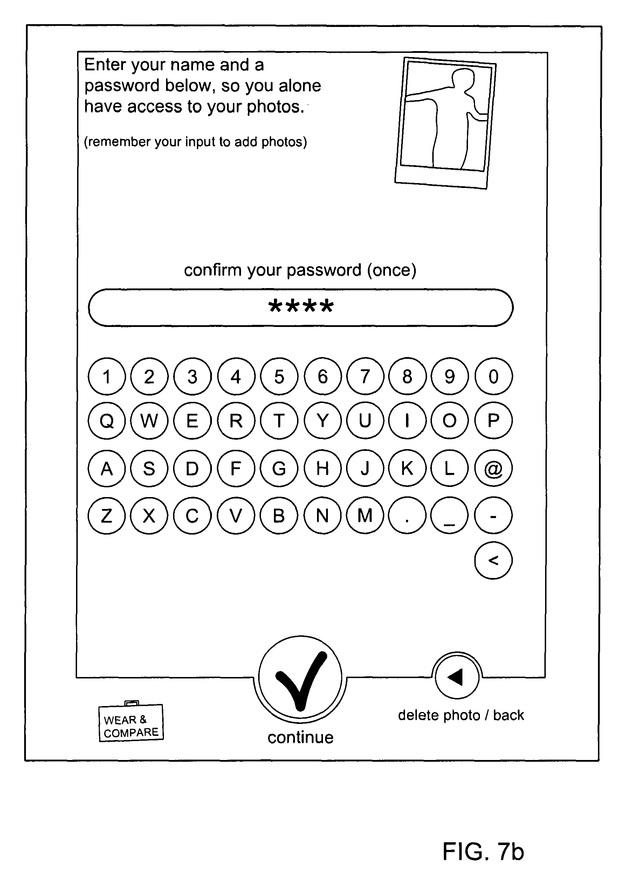

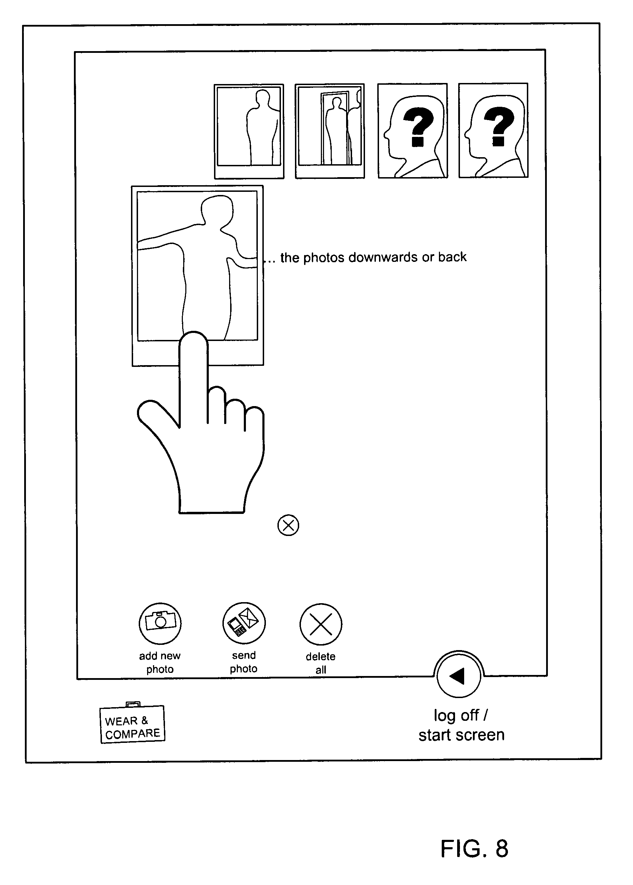

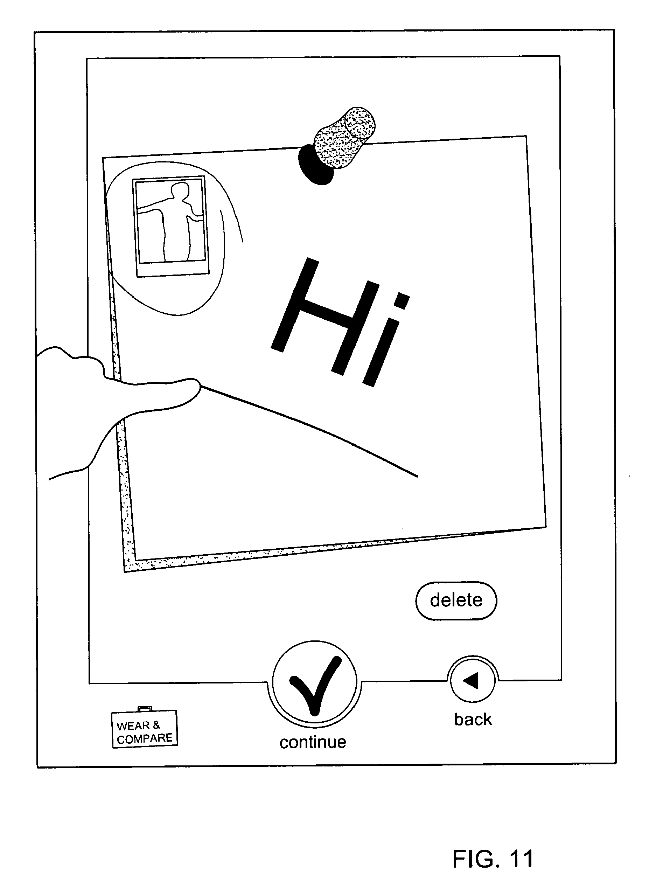

Possible order of proceeding (see also appended screenshots/photographs):
- No motion detected mode (for instance advertising image);
- (someone comes near) motion detected mode (start screen, see Fig. 2);
- **information** about the operation can be viewed (information screen, see Fig. 3)
- it is indicated that an **image** needs to be **taken** (photograph-taking screen, see Fig. 4). After this has been indicated, for instance by activating a button ("PHOTO") from the screen, a few seconds after this, a photograph can be taken with the camera so that the respective person has the time to stand at some distance from the screen and the camera for taking the photograph;
- without taking a photograph first, one can identify oneself and view one's **images;**
- a **timer** to be set counts down and then takes an image (then timer is in "circle");
- image is shown and can be **approved or rejected** (photograph approval screen, see Fig. 5);
- (upon approval) the user needs to **identify** himself (electronically (RFID), client card, ID card (passport, driver's license, etc.) and/or biometrically) (identification screen card or manually, see Fig. 6). With manual identification also the images; password (Fig. 7a) and confirm password (Fig. 7b));
- (when one has identified oneself), then one can **view/zoom/edit/delete/compare/drag** the images taken (viewing screen, see Fig. 8)
- then one can quickly **add images** (user has already been identified) (viewing screen, see Fig. 8)
- one can **select and send** images via the Internet (e.g. e-mail), but also directly to mobile telephone (e.g. Bluetooth) (see photograph; viewing screen, see Fig. 8) and (see photograph; selection of photograph for sending, see Fig. 9) and (entering e-mail address for sending, see Fig. 10); and
- one can also **add comments** made by oneself to a number of photographs to be sent (add comment, see Fig. 11).

In order to make the perception as realistic as possible, it is possible to adapt the background of the images to a particular situation (for instance a ballroom when one is trying on a gala dress, or a beach when trying on swimwear).

When entering an e-mail address, the user can tick a box to be kept informed of a "newsletter" to be determined by the respective owner of Wear & Compare. If the user opts for this, then his e-mail address will be put in a list which is or is not available to the retailers (entering e-mail address for sending, see Fig. 11).

The customer or store visitor may also take a photograph of the clothing tried on by him or her with the full-length mirror according to the invention. This photograph is then sent from the store by the full-length mirror according to the invention via the Internet (e-mail address) to the (e-mail box of) the customer. At home, the customer can open this e-mail and then forward this photograph to e-mail addresses of third parties or community sites (such as Hyves, Twitter and Facebook).

The software of the full-length mirror according to the invention records the number of forwarded photographs and records how many messages (including photographs) are opened by third parties. The information about the number of opened photographs by third parties can be used to determine the discount that the customer receives from the retailer.

By the system of the full-length mirror according to the invention, the customer can also be informed about the amount of discount that the customer will receive upon purchase of an article from the retailer.

Because the photographs are sent including a logo, or indication of the retailer, and the customer distributes these via the Internet, the marketing of the retailer is taken care of by the customer. The customer may, in turn, be rewarded by the retailer in the form of discount. Thereby, the invention also provides a marketing instrument which can measure the reach and effect of a marketing action.

It will appear from the above that a system according to the invention may further be arranged in particular to let the at least one image be ordered, edited and/or deleted by the user by "dragging" the at least one image across the display, in particular across a touch screen.

The system according to the invention may also be arranged to store images in the signal processing unit so that a user can view these images again later on the display, preferably not until the user has again been able to successfully identify himself to the system.

The system according to the invention may also operatively collect the following data: number of users and/or the times of the use and/or number of images taken and/or information about articles recognized by the system, and/or number of sent e-mails and/or users (having, for instance, been identified on the basis of an e-mail address entered into the system, electronic and/or biometric identification by the system) who have taken images.

The system according to the invention may further be arranged such that a user identified by the system needs to identify himself again to the system to be able to use the system when a predetermined period since the last identification of the respective user by the system took place has elapsed. Then the system according to the invention may be arranged in order that a user can add images into the system at any moment by again identifying himself to the system.

The system according to the invention is preferably further provided with a housing with the camera and the display.

When the display is of reflecting design, it is advantageous if the display is designed such that it can serve as a mirror when no image is shown on the display. Here, it is preferred that the display is designed such that, when an image is shown on the display, the light intensity of the display can be so strong that the display can no longer serve as a normal mirror so that only the image is well visible and not a reflection, if any.

The invention is not limited to the exemplary embodiments described. Thus, in each case, instead of a photograph, a different type of image of a person may be intended, such as video. Also, in addition to the image, audio may be recorded by the camera and be processed by the signal processing unit. Further, (touch) screen 2 may also be understood to mean: multi/dual touch 2. Also, in addition to the display 2, the system may be provided with a real mirror and/or the display 2 may be of reflecting design. If the display 2 is of reflecting design, it can function as a mirror when no image is being produced by means of the display. If an image is shown on the display, the light intensity of the display can be so strong that the display does not work as a real, practical mirror anymore so that only the image is well visible and not a reflection, if any.

Explanation of characters used:
retailer → owner of a store or store chain where various articles may be sold.
user → shopping (potential) customer

### Important fields of application

- clothing business
- optics business
- accessories business
- shoe business

## Claims

1. A system for providing a full-length mirror provided with a display, preferably the size of a full-length mirror, and a camera for obtaining at least one image (such as a photograph, a video, and the like) of a user standing in front of the display and a signal processing unit for depicting an image of the user made with the camera on the display and **characterized in that** the system is arranged to recognize articles worn by the user by means of electronic recognition, and then to show information on the display on the basis of this recognition information.

2. A system according to claim 1, **characterized in that** the system is further arranged to be able to record an identity of a user, for instance **in that** a user enters his name and optionally a password into the system or **in that** an identity card of the user is read out by the system and to link at least one image to the identity.

3. A system according to claim 2, **characterized in that** the signal processing means are arranged to encrypt said link, identity and/or image.

4. A system according to claim 2 or 3, **characterized in that** the signal processing unit is arranged to store the at least one image and the corresponding identity of the user, for instance so that they can be viewed again later on the display.

5. A system according to any one of the preceding claims 2-4, **characterized in that** the system is provided with means to enter the identity of the user into the system, such as a touch screen and/or to determine and enter the identity of a user into the system, such as an RFID reader or a biometric reader.

6. A system according to any one of the preceding claims, **characterized in that** the display comprises a touch screen.

7. A system according to any one of the preceding claims, **characterized in that** the system is arranged to enter an e-mail address of the user into the system, for instance manually (for instance via input means such as the display comprising a touch screen) and/or automatically, for instance by retrieving the e-mail address on the basis of an identity of the user which is known to the system, wherein the retrieval, for instance, takes place from a customer card database of the retailer or from the signal processing unit.

8. A system according to any one of the preceding claims, **characterized in that** the signal processing unit is arranged to send the at least one image with an accompanying message, which can also be entered into the system, for instance via input means such as the display comprising a touch screen, via the Internet to the user and/or to third parties, and/or (directly or indirectly) to other popular web applications.

9. A system according to any one of the preceding claims, **characterized in that** the electronic recognition uses pixel recognition, optical recognition, including barcode and RFID, including LF, HF and UHF, and the information then shown on the display relates to at least one of available sizes of the recognized article, type of fabrics or material used of the recognized article, available stock of the recognized article, available colors of the recognized article, advice about possible combinations with other articles, or models wearing the recognized article.

10. A system according to any one of the preceding claims, **characterized in that** the system is arranged to collect data about the use of the system, such as which users are identified, the times and/or frequency of the respective identifications, which articles are recognized by the system, the times and/or frequency of the respective recognitions, and/or any relationships between these data, such as for which identified user which articles have been recognized.

11. A system according to claim 10, **characterized in that** the signal processing unit is arranged to statistically process the collected data and/or to make the collected information and any results of a statistical processing of the collected data available, for instance via the Internet, to, for instance, a central data center and/or a retailer.

12. A system according to any one of the preceding claims, **characterized in that** the system is arranged to carry out motion detection and to set the system in particular modes on the basis of this motion detection (for instance, when no one is standing in front of the display, the system shows an advertising image on the display).

13. A system according to any one of the preceding claims, **characterized in that** the system is arranged to go through at least a number of the following modes of use:
- mode for no motion detected by system, display shows, for instance, advertising image;
- mode for motion detected, display shows, for instance, a start screen;
- mode for showing information about the operation of the system on display;
- mode for taking, with the camera, at least one image of a user who is in front of the display;
- mode for identifying a user;
- mode for storing an image obtained with the camera;
- mode for showing at least one image obtained with the camera on the display;
- mode for showing a plurality of images obtained with the camera on the display;
- mode for sending at least one image obtained with the camera via e-mail;
- mode for sending, via e-mail, information or messages entered into the system by the user; and
- mode for, upon entering an e-mail address into the system, indicating that information such as a newsletter can be sent to the respective e-mail address.

14. A system according to any one of the preceding claims, **characterized in that** the display has a reflecting design so that it can function as a real mirror.

15. A central data center according to claim 11 in combination with a plurality of systems according to any one of the preceding claims.
